# EUROPÄISCHE PATENTSCHRIFT

(11) **EP 2 803 586 B1**
(45) Veröffentlichungstag und Bekanntmachung des Hinweises auf die Patenterteilung: **25.11.2015**
(21) Anmeldenummer: 13002635.4
(22) Anmeldetag: 18.05.2013
(51) Int. Cl.: B64F 1/305

(54) **Ausschwenkbares Vordach einer Fluggasttreppe oder Fluggastbrücke**
Pivotable canopy of an aircraft boarding bridge or stairs
Avant-toit basculant d'une passerelle ou d'un escalier d'embarquement

(43) Veröffentlichungstag der Anmeldung: 19.11.2014
(73) Patentinhaber: Hübner GmbH & Co. KG, 34123 Kassel (DE)
(72) Erfinder: Karasek, Jens, 34260 Kaufungen (DE)
(74) Vertreter: Walther, Walther & Hinz GbR

(56) Entgegenhaltungen:
- EP-A2- 1 867 569
- WO-A1-2013/050839
- DE-B4-102004 016 272
- US-A- 4 120 067

## Beschreibung

Die Erfindung betrifft ein ausschwenkbares Vordach einer Fluggasttreppe oder Fluggastbrücke gemäß dem Oberbegriff des Anspruchs 1.

Ein ausschwenkbares Vordach einer Fluggasttreppe oder Fluggastbrücke der eingangs genannten Art ist aus der DE 10 2004 016 272 B4 bekannt. Die Konstruktion dieses Vordaches hat sich außerordentlich bewährt und ist vielfach im Einsatz. Jedoch hat sich herausgestellt, dass bei stark konturierten Flugzeugrümpfen, und hier insbesondere im Bereich des bugseitigen Zustiegs der flexible Rahmen mit welchem das Vordach an der Außenhaut des Flugzeugrumpfes anliegt, bugseitig also zum vorderen Ende des Flugzeugs zu nicht immer bündig an der Flugzeughülle anliegt. Dies kann zum einen daran liegen, wie bereits ausgeführt, dass der Flugzeugrumpf in diesem Bereich des Zugangs stark konturiert ist, oder auch daran, dass insbesondere bei großen Vordächern aufgrund der stabilen Gestaltung der Gelenkarme die Eigenelastizität des Vordaches und hier insbesondere der Gelenkarme nur minimal ist. Das heißt, dass die Verformung nicht ausreichend ist, um ein vollflächiges Anliegen des flexiblen Rahmens mit dem Bumper zu gewährleisten.

Aus der US 4,120,067 ist ein Vordach einer Fluggastbrücke bekannt, wobei das Vordach an seinem freien Ende einen Rahmen aufweist, der mit einem umlaufenden Bumper versehen ist. Zur Ausstellung des Vordachs in Richtung auf die Außenhaut des Flugzeugs ist auf jeder Seite jeweils ein teleskopierbarer Gelenkarm vorgesehen. Dieser teleskopierbare Gelenkarm weist an seinem dem flexiblen Rahmen mit dem Bumper zugeordneten Ende ein Endglied auf, wobei dieses Endglied durch ein Doppelgelenk mit dem freien Ende des teleskopierbaren Armes in Verbindung steht. Durch dieses Doppelgelenk wird ein seitliches Ausschwenken des Endgliedes erreicht. Eingefahren wird der Arm durch einen Stellantrieb.

Aus der EP 1867569 A2 ist ebenfalls das Vordach einer Fluggastbrücke oder -treppe bekannt, wobei auch hier zu beiden Seiten des Vordaches ein Gelenkarm vorgesehen ist, durch den das Vordach in Richtung auf die Außenhaut des Flugzeugs ausgestellt werden kann. Für den Antrieb des Gelenkarmes sind Kolbenzylinderantriebe vorgesehen.

Die der Erfindung zugrunde liegende Aufgabe besteht demzufolge darin, dafür zu sorgen, dass der Bumper mit dem flexiblen Rahmen vollflächig am Flugzeugrumpf anliegt.

Die Lösung der Aufgabe erfolgt durch die Merkmale des kennzeichnenden Teils des Anspruchs 1 in Verbindung mit den Merkmalen des Oberbegriffs.

Das Vordach der Fluggasttreppe oder Fluggastbrücke weist zum Ausschwenken eine Betätigungsvorrichtung auf, wobei die Betätigungsvorrichtung mindestens für den einen ersten Gelenkarm ein Zugmittel umfasst. Im Bereich des Portalrahmens ist eine Rolle für das Zugmittel vorgesehen. Das Endglied des mindestens einen ersten Gelenkarms ist durch ein Schwenkgelenk seitlich ausschwenkbar. Ein seitliches Ausschwenken bedeutet hierbei, dass das Endglied in Richtung der Breite des flexiblen Rahmens ausschwenkbar ist, und zwar insbesondere in Richtung auf die Innenseite des Vordaches ausschwenkbar ist. Das heißt, dass bei Anlegen des flexiblen Rahmens des ausschwenkbaren Vordaches an der Flugzeugaußenhaut im Moment des Auftreffens des flexiblen Rahmens im Bereich des Endgliedes auf die Außenhaut des Flugzeuges, sich das Endglied des mindestens einen ersten Gelenkarmes leicht nach innen verschwenkt, und insofern für ein vollflächiges Anliegen des flexiblen Rahmens an der Außenhaut des Flugzeugs sorgt. Durch das Verschwenken des Endgliedes nach innen wird ein im Wesentlichen spannungsfreies Anliegen des Vordaches am Flugzeugrumpf gewährleistet.

Das Zugmittel ist seitlich am Endglied des Gelenkarmes angelenkt, also an der Seite zu der das Endglied nicht verschwenkt. Das heißt, die Anlenkung des Zugmittels erfolgt exzentrisch. Das hat zur Folge, dass durch die Anordnung des Zugmittels am Endglied an der Außenseite des Endgliedes beim Einfahren das Geradestellen des Endgliedes unterstützt wird.

Vorteilhafte Merkmale und Ausgestaltungen der Erfindung sind den Unteransprüchen zu entnehmen. Im Folgenden wird der Aufbau des ersten Gelenkarms näher beschrieben.

So ist insbesondere vorgesehen, dass der Oberarm mit dem Unterarm bei dem einen ersten Gelenkarm durch ein Scharniergelenk mit im Einbauzustand horizontaler Scharnierachse verbunden ist, wobei die Gelenkachse des Schwenkgelenkes für das seitlich ausschwenkbare oder ausstellbare Endglied senkrecht zur Scharnierachse zwischen Oberarm und Unterarm verläuft.

Nach einem weiteren Merkmal der Erfindung ist das Endglied durch ein Zwischenglied mit dem Unterarm verbunden. Das heißt, dass der erste Gelenkarm aus insgesamt vier Elementen besteht, nämlich einem Oberarm, einem damit gelenkig verbundenen Unterarm, an dem wiederum ein Zwischenglied angeordnet ist, das vorzugsweise in Richtung der Schwenkebene des Gelenkarmes relativ zum Unterarm abgewinkelt ist, sowie dem Endglied, das durch ein Schwenkgelenk seitlich verschwenkbar durch das Zwischenglied aufnehmbar ist.

Nach einem besonders vorteilhaften Merkmal ist das Endglied entgegen einer Federkraft aus der Ebene mit dem Unterarm verschwenkbar. Hierdurch wird bewirkt, dass beim Einfahren des Vordaches in jedem Fall sichergestellt ist, dass das Endglied sich in einer Ebene mit dem ersten Gelenkarm befindet.

Weiterhin vorteilhaft ist, wenn sichergestellt ist, dass das Endglied seitlich, lediglich in einer Richtung verschwenkbar ist, nämlich seitlich in Richtung der Innenseite des Vordaches.

Die Verbindung zwischen dem Zwischenglied und dem Endglied ist als in sich seitlich bewegliche Verbindung ausgebildet, wobei das Zwischenglied einen Ansatz aufweist, der mit seitlichem Spiel durch das Endglied aufgenommen ist. Das heißt, der Ansatz des Zwischengliedes lagert in dem Hohlprofil des Endglieds mit seitlichem Spiel, um die seitliche Ausstellbarkeit des Endgliedes relativ zum Zwischenglied zu ermöglichen. Zwischen dem Ansatz und dem als Hohlprofil ausgebildeten Endglied ist ein Elastomerbock angeordnet, gegen den das Endglied federnd nachgiebig verschwenkbar ist. Das heißt, der Abstand zwischen dem Ansatz des Zwischengliedes und der Innenwand des Endgliedes bestimmt unter anderem den Grad der Auslenkung des Endgliedes.

Vorteilhaft steht auch der zweite Gelenkarm durch ein Zugmittel, z. B. ein Seil oder ein Gurt mit dem Portalrahmen in Verbindung.

Im Einzelnen ist des Weiteren jedem Zugmittel am Portalrahmen eine Rolle zum Auf- und Abrollen des Zugmittels also beispielsweise einem Gurt oder einem Seil zugeordnet, wobei die beiden Rollen durch eine Welle mit einem Antrieb, beispielsweise einem Rohrmotor, verbunden sind.

Zur Einleitung der Ausstellbewegung der Gelenkarme umfasst die Betätigungsvorrichtung mindestens ein Antriebsglied für den mindestens einen ersten Gelenkarm, das insbesondere als Gasdruckfeder ausgebildet ist.

Anhand der Zeichnungen wird die Erfindung nachstehend beispielhaft näher erläutert.

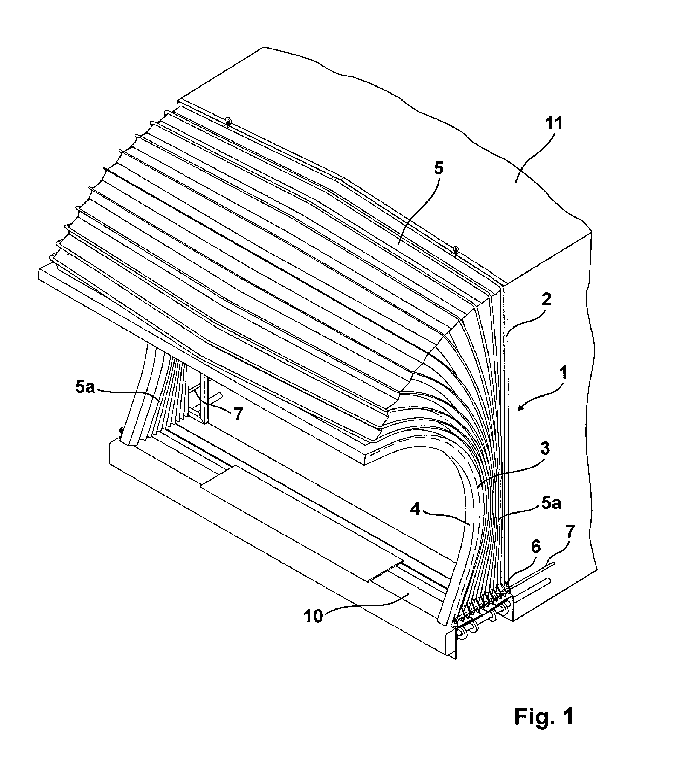

- Fig. 1: zeigt das Vordach der Fluggasttreppe oder Fluggastbrücke in einer perspektivischen Ansicht von oben;
- Fig. 2: zeigt eine Seitenansicht des Vordaches gemäß Fig. 1 im Schnitt;
- Fig. 3: zeigt eine Ansicht gemäß Fig. 1, wobei jedoch der Balg weggelassen ist;

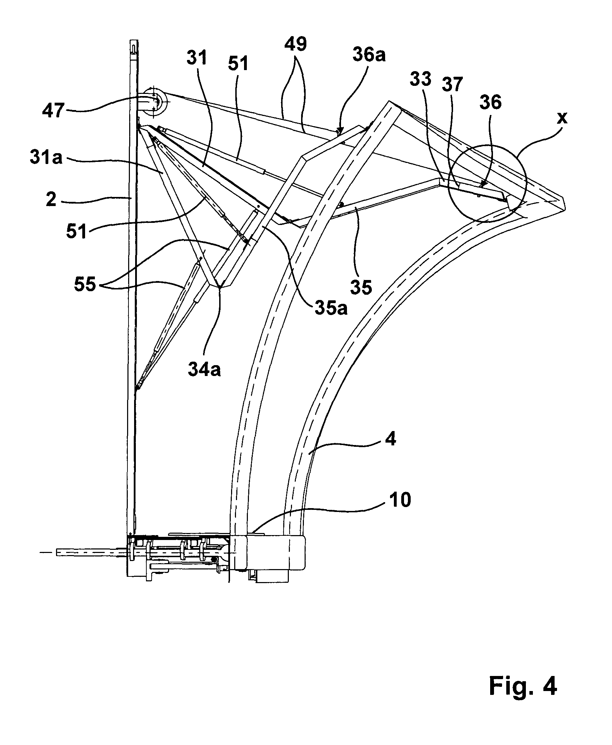

- Fig. 4: zeigt eine Ansicht gemäß Fig. 2 ebenfalls ohne einen Balg;
- Fig. 5: zeigt den Ausschnitt X aus Fig. 4 in vergrößerter Darstellung ohne frontseitigem Rahmen;
- Fig. 6: zeigt einen Schnitt gemäß der Linie VI-VI aus Fig. 5.

Das Vordach 1 der Fluggasttreppe oder Fluggastbrücke 11 umfasst einen Portalrahmen 2 und den flexiblen Rahmen 3, der endseitig den Bumper 4 aus elastisch nachgiebigem Material, wie z. B. Schaumstoff, aufnimmt. Zwischen dem Portalrahmen einerseits und dem flexiblen Rahmen 3 andererseits ist der Faltenbalg 5 aufgespannt. Der Faltenbalg 5 ist seiner Kontur ebenso wie der flexible Rahmen und auch der Portalrahmen 2 nach Art eines U ausgebildet, und überspannt den insgesamt mit 10 bezeichneten Übergangsboden. Im Bodenbereich der beiden Schenkel 5a des Balges 5 besitzt der Balg mehrere hintereinander angeordnete Balgösen 6, die von der Führungsschiene 7 aufgenommen werden, wobei die Führungsschiene 7 endseitig zum einen an den flexiblen Rahmen und zum anderen an der Fluggasttreppe bzw. Fluggastbrücke 11 selbst oder dem Portalrahmen befestigt ist.

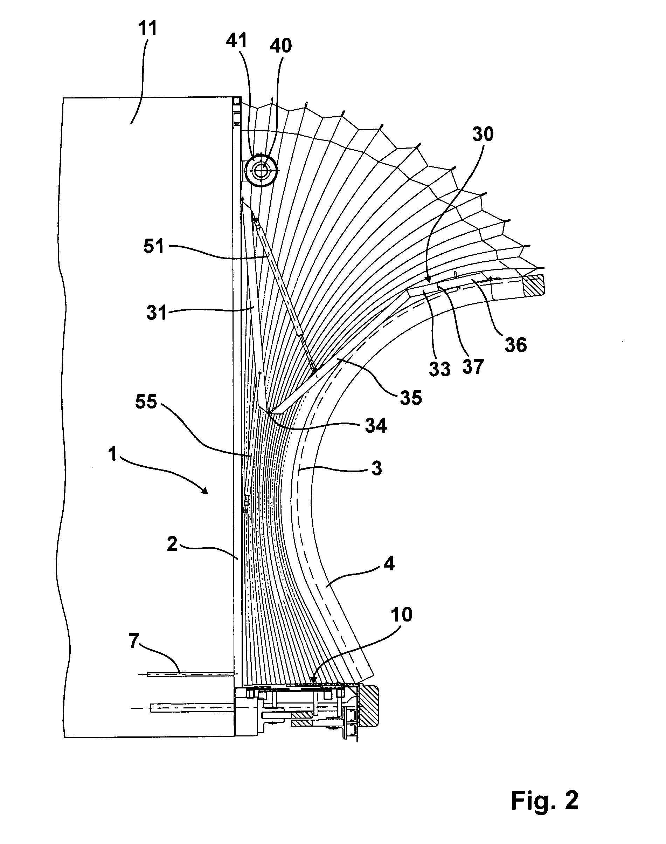

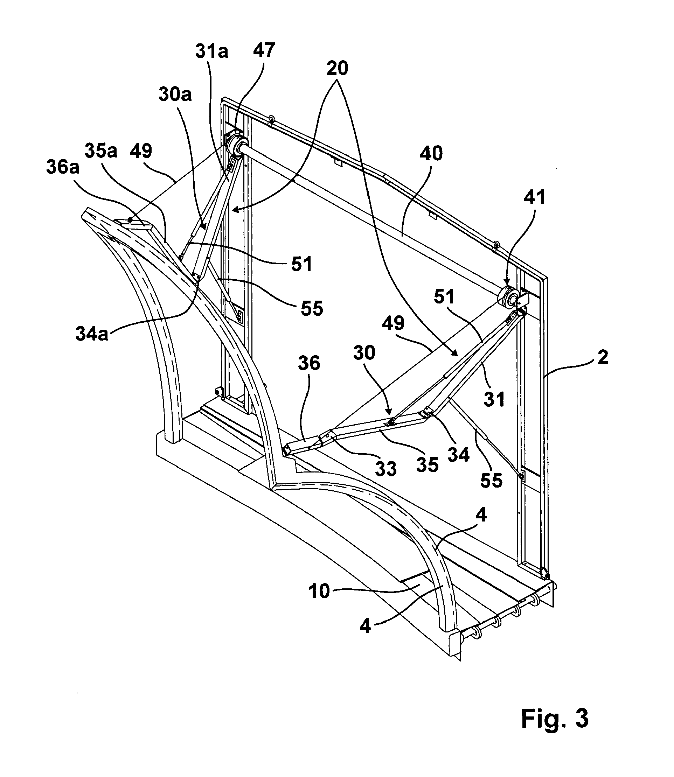

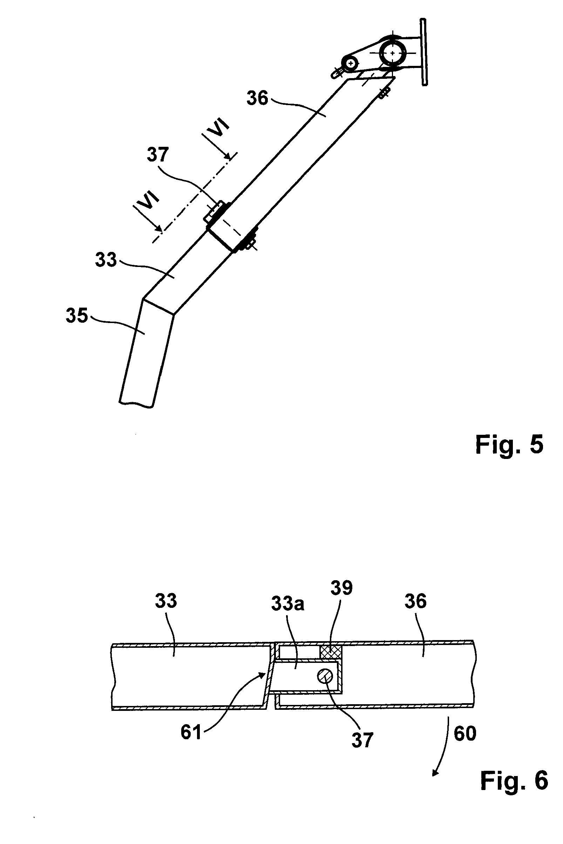

Aus der Darstellung gemäß Fig. 2 ist zum einen die Betätigungsvorrichtung 20 erkennbar, umfassend den ersten Gelenkarm 30 und den zweiten seitlich dazu beabstandeten Gelenkarm 30a. Den beiden Gelenkarmen 30, 30a ist jeweils eine am Portalrahmen 2 angeordnete Rolle 41, 47 für ein Zugmittel 49 zugeordnet. Die beiden Rollen 41, 47 sind durch die drehbare Welle 40, die über einen nicht dargestellten Antrieb z. B. in Form eines Rohrmotors verfügt, verbunden. Die Betätigungsvorrichtung umfasst darüber hinaus für den ersten und zweiten Gelenkarm 30, 30a jeweils zwei Antriebsglieder 51, 55, die vorteilhaft als Gasdruckfedern ausgebildet sind. Der insgesamt mit 30, 30a bezeichnete Gelenkarm ist im Bereich eines jeden Schenkels 5a des Faltenbalges 5 im Deckenbereich des Balges am Portalrahmen angeordnet, und umfasst den gelenkig mit dem Portalrahmen verbundenen Oberarm 31, 31 a und den am Oberarm 31, 31 a ebenfalls gelenkig angeordneten Unterarm 35, 35a. Der Unterarm und der Oberarm sind durch ein Scharniergelenk 34, 34a miteinander verbunden, das im Einbauzustand eine horizontale Scharnierachse aufweist. Der Unterarm 35, 35a weist endseitig das Endglied 36, 36a auf, wobei sich die Anbindung des Endgliedes 36 des ersten Gelenkarms 30 an dem Unterarm der Darstellung gemäß Fig. 5 und Fig. 6 entnehmen lässt. Der Unterarm 35 zeigt abgewinkelt zum Unterarm und zwar in der Ebene des Gelenkarms 30 abgewinkelt, das Zwischenglied 33. Das Zwischenglied 33 besitzt einen Ansatz 33a, der mit seitlichem Spiel in das als Hohlprofil ausgebildete Endglied 36 ragt. Des Weiteren ist erkennbar, dass das Endglied 36 durch das Schwenkgelenk 37 mit dem Ansatz 33a schwenkbar verbunden ist. Das Endglied 36 ist relativ zu dem Zwischenglied 33 aus der Ebene des Gelenkarmes 30 verschwenkbar, wie sich dies in Anschauung von Fig. 3 und Fig. 6 ergibt. Um nun zu gewährleisten, dass das Endglied 36 nur in eine Richtung, nämlich in Richtung des Pfeiles 60 (Fig. 6) ausschwenkbar ist, ist das Zwischenglied 33 an dem dem Endglied 36 zugewandten Ende keilförmig (Pfeil 61) ausgebildet, sodass tatsächlich das Endglied 36 ausschließlich in Richtung des Pfeiles 60 um die Gelenkachse des Schwenkgelenkes 37 verschwenken kann. Das heißt, das höhere Ende des keilförmigen Endes bildet einen Anschlag für das Endglied.

Zwischen dem Ansatz 33a und der Innenwandung des als Hohlprofil ausgebildeten Endgliedes 36 befindet sich ein Elastomerbock 39 als ein mögliches Federelement, sodass die Verschwenkung des Endgliedes 36 in Richtung des Pfeiles 60 entgegen der Kraft des Elastomerbockes 39 erfolgt, sodass das Endglied 36 beim Einziehen des Vordaches immer in seine Ausgangsposition zurückgeht.

Das Endglied 36 steht mit der Rolle 41 durch einen Gurt oder ein Seil 49 in Verbindung und zwar derart, dass das Seil 49 seitlich, also exzentrisch an dem Endglied angeordnet ist, wie sich dies unmittelbar in Anschauung von Fig. 3 ergibt. Es sei an dieser Stelle darauf hingewiesen, dass der gegenüberliegende Gelenkarm 30 eine solche gelenkige Ausbildung des Endgliedes nicht aufweisen muss. Dies ist vielmehr nur für den Gelenkarm im Bereich des bugseitigen Endes des Flugzeugs vorgesehen, um ein im Wesentlichen spannungsfreies Anliegen des Vordachs am Flugzeugrumpf zu gewährleisten.

### Bezugszeichenliste:

- 1: Vordach
- 2: Portalrahmen
- 3: flexible Rahmen
- 4: Bumper
- 5: Faltenbalg
- 5a: Schenkel des Faltenbalges
- 6: Balgösen
- 7: Führungsschiene
- 10: Übergangsboden
- 11: Fluggasttreppe oder -brücke
- 20: Betätigungsvorrichtung
- 30: erster Gelenkarm
- 30a: zweiter Gelenkarm
- 31: Oberarm
- 31a: Oberarm
- 33: Zwischenglied
- 33a: Ansatz
- 34: Scharniergelenk
- 34a: Scharniergelenk
- 35: Unterarm
- 35a: Unterarm
- 36: Endglied
- 36a: Endglied
- 37: Schwenkgelenk
- 39: Elastomerbock
- 40: drehbare Welle
- 41: Rolle
- 47: Rolle
- 49: Zugmittel (Seil, Gurt)
- 51: Antriebsglied (Gasdruckfeder)
- 55: Antriebsglied (Gasdruckfeder)
- 60: Pfeil
- 61: Pfeil

## Patentansprüche

1. Ausschwenkbares Vordach (1) einer Fluggasttreppe oder Fluggastbrücke, wobei das Vordach stirnseitig an seinem freien Ende einen flexiblen Rahmen (3) aufweist, der durch zwei beabstandet zueinander, nebeneinander angeordnete Gelenkarme (30,30a) mit einem Portalrahmen (2) an der Fluggasttreppe oder Fluggastbrücke (11) verbindbar ist, wobei zwischen dem flexiblen Rahmen (3) und dem Portalrahmen (2) ein Balg (5) angeordnet ist, wobei der eine erste und der andere zweite Gelenkarm (30,30a) einen an dem Portalrahmen (2) gelenkig angeordneten Oberarm (31,31 a) sowie einen mit dem Oberarm (31,31 a) gelenkig verbundenen Unterarm (35,35a) umfasst, wobei der Unterarm (35,35a) ein Endglied (36,36a) aufweist, wobei das Vordach (1) zum Ausschwenken eine Betätigungsvorrichtung (20) aufweist, wobei die Betätigungsvorrichtung (20) mindestens ein Zugmittel (49) umfasst, wobei im Bereich des Portalrahmens (2) mindestens eine Rolle (41, 47) für das mindestens eine Zugmittel (49) vorgesehen ist,
**dadurch gekennzeichnet,**
**dass** das Endglied (36) des mindestens einen ersten Gelenkarms (30) durch ein Schwenkgelenk (37) seitlich ausschwenkbar ist, wobei das Zugmittel (49) seitlich am Endglied (36) des ersten Gelenkarmes (30) derart angelenkt ist, dass das Endglied (36) beim Einziehen des ersten Gelenkarms gerade gezogen wird.

2. Ausschwenkbares Vordach (1) einer Fluggasttreppe oder Fluggastbrücke nach Anspruch 1,
**dadurch gekennzeichnet,**
**dass** der Oberarm (31) mit dem Unterarm (35) des einen ersten Gelenkarms (30) durch ein Scharniergelenk (34) mit im Einbauzustand horizontaler Schwenkachse verbunden ist, wobei die Gelenkachse des Schwenkgelenks (37) senkrecht zu der Scharnierachse des Scharniergelenks (34) verläuft.

3. Ausschwenkbares Vordach (1) einer Fluggasttreppe oder Fluggastbrücke nach einem der voranstehenden Ansprüche,
**dadurch gekennzeichnet,**
**dass** das Endglied (36) des einen ersten Gelenkarms (30) durch ein Zwischenglied (33) mit dem Unterarm (35) verbunden ist.

4. Ausschwenkbares Vordach (1) einer Fluggasttreppe oder Fluggastbrücke nach Anspruch 3,
**dadurch gekennzeichnet,**
**dass** das Zwischenglied (33) relativ zum Unterarm (35) abgewinkelt ist.

5. Ausschwenkbares Vordach (1) einer Fluggasttreppe oder Fluggastbrücke nach einem der voranstehenden Ansprüche,
**dadurch gekennzeichnet,**
**dass** das Endglied (36) des einen ersten Gelenkarms (30) entgegen einer Federkraft eines Federelements aus der Ebene mit dem Unterarm (35) verschwenkbar ist.

6. Ausschwenkbares Vordach (1) einer Fluggasttreppe oder Fluggastbrücke nach Anspruch 5,
**dadurch gekennzeichnet,**
**dass** das Endglied (36) seitlich in Richtung der Innenseite des Vordaches verschwenkbar ist.

7. Ausschwenkbares Vordach (1) einer Fluggasttreppe oder Fluggastbrücke nach einem der Ansprüche 3 oder 4, oder 5 oder 6 wenn abhängig von 3 oder 4,
**dadurch gekennzeichnet,**
**dass** das Zwischenglied (33) einen Ansatz (33a) aufweist, der mit dem Endglied (36) schwenkbeweglich verbunden ist.

8. Ausschwenkbares Vordach (1) einer Fluggasttreppe oder Fluggastbrücke nach Anspruch 7,
**dadurch gekennzeichnet,**
**dass** zwischen dem Ansatz (33a) und der Innenwandung des Endgliedes (36) ein Elastomerbock (39) als Federelement angeordnet ist.

9. Ausschwenkbares Vordach (1) einer Fluggasttreppe oder Fluggastbrücke nach einem der voranstehenden Ansprüche,
**dadurch gekennzeichnet,**
**dass** jedem Gelenkarm (30, 30a) ein Zugmittel (49) zugeordnet ist, wobei jedem Zugmittel (49) am Portalrahmen (2) eine Rolle (41, 47) zum Auf- und Abrollen des Zugmittels zugeordnet ist, wobei die beiden Rollen (41, 47) durch eine drehbare Welle (40) mit einem Antrieb verbunden sind.

10. Ausschwenkbares Vordach (1) einer Fluggasttreppe oder Fluggastbrücke nach Anspruch 9,
**dadurch gekennzeichnet,**
**dass** die Betätigungsvorrichtung (20) mindestens ein Antriebsglied (51, 55) für den einen ersten und anderen zweiten Gelenkarm (30, 30a) aufweist.

11. Ausschwenkbares Vordach (1) einer Fluggasttreppe oder Fluggastbrücke nach Anspruch 10,
**dadurch gekennzeichnet,**
**dass** das Antriebsglied (51, 55) als Gasdruckfeder ausgebildet ist.

## Claims

1. A pivotable canopy roof (1) of an air passenger stair or an air passenger bridge, the canopy roof comprising a flexible frame (3) at its free front end, which is connected to a portal frame (2) on the air passenger stair or air passenger bridge (11) by way of two articulated arms (30, 30a) disposed next to each other in a spaced-apart relationship, wherein a bellows (5) is disposed between the flexible frame (3) and the portal frame (2), the first and second articulated arm (30, 30a) including an upper arm (31, 31 a) articulately disposed on the portal frame (2) and a lower arm (35, 35a) articulately connected to the upper arm (31, 31 a), wherein the lower arm (35, 35a) comprises an end member (36, 36a), wherein the canopy roof (1) comprises an actuation device (20) for pivoting the canopy roof, wherein the actuation device (20) comprises at least one traction means (49), wherein at least one roll (41, 47) is provided in the area of the portal frame (2) for the at least one traction means (49),
**characterized in that**
the end member (36) of the at least one first articulated arm (30) is laterally pivotable by way of a pivot joint (37), the traction means (49) being laterally articulated on the end member (36) of the first articulated arm (30) in such a manner that the end member (36) is pulled straight when retracting the first articulated arm.

2. The pivotable canopy roof (1) of an air passenger stair or air passenger bridge according to claim 1,
**characterized in that**
the upper arm (31) is connected to the lower arm (35) of the one first articulated arm (30) by way of a hinge joint (34) with a hinge axis that is horizontal in the mounted state, the joint axis of the pivot joint (37) running perpendicular to the hinge axis of the hinge joint (34).

3. The pivotable canopy roof (1) of an air passenger stair or an air passenger bridge according to one of the afore-mentioned claims,
**characterized in that**
the end member (36) of the one first articulated arm (30) is connected to the lower arm (35) by way of an intermediate member (33).

4. The pivotable canopy roof (1) of an air passenger stair or an air passenger bridge according to claim 3,
**characterized in that**
the intermediate member (33) is angled relative to the lower arm (35).

5. The pivotable canopy roof (1) of an air passenger stair or an air passenger bridge according to one of the afore-mentioned claims,
**characterized in that**
the end member (36) of the one first articulated arm (30) is pivotable out of the plane of the lower arm (35) against the spring force of a spring element.

6. The pivotable canopy roof (1) of an air passenger stair or an air passenger bridge according to claim 5,
**characterized in that**
the end member (36) is laterally pivotable in the direction of the interior of the canopy roof.

7. The pivotable canopy roof (1) of an air passenger stair or an air passenger bridge according to one of the claims 3 or 4, or 5 or 6 when dependent on claim 3 or 4,
**characterized in that**
the intermediate member (33) comprises a projection (33a) that is pivotably connected to the end member (36).

8. The pivotable canopy roof (1) of an air passenger stair or an air passenger bridge according to claim 7,
**characterized in that**
an elastomer block (39) is disposed as a spring element between the projection (33a) and the interior wall of the end member (36).

9. The pivotable canopy roof (1) of an air passenger stair or an air passenger bridge according to one of the afore-mentioned claims,
**characterized in that**
a traction means (49) is attributed to each articulated arm (30, 30a), wherein on the poral frame (2) a roll (41, 47) is attributed to each traction means (49) for rolling up and unrolling the traction means, the two rolls (41, 47) being connected to a drive by a rotatable shaft (40).

10. The pivotable canopy roof (1) of an air passenger stair or an air passenger bridge according to claim 9,
**characterized in that**
the actuation device (20) includes at least one drive member (51, 55) for the one first and other second articulated arm (30, 30a).

11. The pivotable canopy roof (1) of an air passenger stair or an air passenger bridge according to claim 10,
**characterized in that**
the drive member (51, 55) is configured as a gas pressure spring.

## Revendications

1. Avant-toit pivotant (1) d'un escalier ou d'une passerelle d'embarquement, où l'avant-toit comporte, à l'avant, à son extrémité libre, un cadre flexible (3) apte à être connecté à un portique (2) de l'escalier ou de la passerelle d'embarquement (11) par deux bras articulés (30, 30a) disposés de manière espacée l'un à côté de l'autre, où un soufflet (5) est disposé entre le cadre flexible (3) et le portique (2), où l'un premier et l'autre deuxième bras articulé (30, 30a) comprend un bras (31, 31 a) arrangé de manière articulée au niveau du portique (2) et un avant-bras (35, 35a) relié de manière articulée ave le bras (31, 31 a), où l'avant-bras (35, 35a) comporte un membre d'extrémité (36, 36a), où, pour pivoter, l'avant-toit (1) comporte un dispositif d'actionnement (20), où le dispositif d'actionnement (20) comprend au moins un moyen de traction (49), où au moins un rouleau (41, 47) est prévu pour l'au moins un moyen de traction (49) dans la région du portique (2),
**caractérisé en ce que**
le membre d'extrémité (36) de l'au moins un premier bras articulé (30) est apte à être pivoté latéralement via une articulation pivotante (37), où le moyen de traction (49) est articulé latéralement au membre d'extrémité (36) du premier bras articulé (30) de telle manière que le membre d'extrémité (36) est tendu lorsque le premier bras articulé est rétracté.

2. Avant-toit pivotant (1) d'un escalier ou d'une passerelle d'embarquement selon la revendication 1,
**caractérisé en ce que**
le bras (31) est relié à l'avant-bras (35) de l'un premier bras articulé (30) par une articulation à charnière (34) ayant un axe de pivotement horizontal à l'état monté, où l'axe d'articulation de l'articulation pivotante (37) s'étend perpendiculairement à l'axe de charnière de l'articulation à charnière (34).

3. Avant-toit pivotant (1) d'un escalier ou d'une passerelle d'embarquement selon l'une quelconque des revendications précédentes,
**caractérisé en ce que**
le membre d'extrémité (36) de l'un premier bras articulé (30) est relié avec l'avant-bras (35) par un membre intermédiaire (33).

4. Avant-toit pivotant (1) d'un escalier ou d'une passerelle d'embarquement selon la revendication 3,
**caractérisé en ce que**
le membre intermédiaire (33) forme un angle avec l'avant-bras (35).

5. Avant-toit pivotant (1) d'un escalier ou d'une passerelle d'embarquement selon l'une quelconque des revendications précédentes,
**caractérisé en ce que**
le membre d'extrémité (36) de l'un premier bras articulé (30) est apte à être pivoté hors du plan de l'avant-bras (35) contre la résilience d'un élément de ressort.

6. Avant-toit pivotant (1) d'un escalier ou d'une passerelle d'embarquement selon la revendication 5,
**caractérisé en ce que**
le membre d'extrémité (36) est apte à être pivoté latéralement dans la direction de l'intérieur de l'avant-toit.

7. Avant-toit pivotant (1) d'un escalier ou d'une passerelle d'embarquement selon l'une des revendications 3 ou 4, ou 5 ou 6 lorsque dépendante de 3 ou 4,
**caractérisé en ce que**
le membre intermédiaire (33) comporte une rallonge (33a) reliée de manière pivotante avec le membre d'extrémité (36).

8. Avant-toit pivotant (1) d'un escalier ou d'une passerelle d'embarquement selon la revendication 7,
**caractérisé en ce que**
un bloc élastomère (39) est disposé en tant qu'élément de ressort entre la rallonge (33a) et la paroi intérieure du membre d'extrémité (36).

9. Avant-toit pivotant (1) d'un escalier ou d'une passerelle d'embarquement selon l'une quelconque des revendications précédentes,
**caractérisé en ce que**
un moyen de traction (49) est associé à chaque bras articulé (30, 30a), où un rouleau (41, 47) est associé à chaque moyen de traction (49) sur le portique (2) pour enrouler et dérouler le moyen de traction, où les deux rouleaux (41, 47) sont reliés à un entraînement par un arbre rotatif (40).

10. Avant-toit pivotant (1) d'un escalier ou d'une passerelle d'embarquement selon la revendication 9,
**caractérisé en ce que**
le dispositif d'actionnement (20) comporte au moins un membre d'entraînement (51, 55) pour l'un premier et l'autre deuxième bras articulé (30, 30a).

11. Avant-toit pivotant (1) d'un escalier ou d'une passerelle d'embarquement selon la revendication 10,
**caractérisé en ce que**
le membre d'entraînement (51, 55) est configuré comme un ressort à gaz.
